# FASCICULE DE BREVET EUROPEEN

(11) **EP 0 774 572 B1**
(45) Date de publication et mention de la délivrance du brevet: **10.04.2002**
(21) Numéro de dépôt: 96402401.2
(22) Date de dépôt: 12.11.1996
(51) Int. Cl.: F02C 1/10

(54) **Turbine à gaz compacte à cycle fermé pour la propulsion d'un véhicule**
Kompaktgasturbine mit geschlossenem Kreislauf zum Antrieb eines Fahrzeuges
Compact closed cycle gas turbine for the propulsion of a vehicle

(30) Priorité: 16.11.1995 FR 9513603
(43) Date de publication de la demande: 21.05.1997
(73) Titulaire: ALCATEL, 75008 Paris (FR)
(72) Inventeur: Fally, Jacques, 91400 Orsay (FR)
(74) Mandataire: Sciaux, Edmond

(56) Documents cités:
- WO-A-95/05529
- DE-A- 2 751 530
- FR-A- 1 165 581
- FR-A- 2 212 488
- FR-A- 2 289 729
- GB-A- 856 260
- GB-A- 1 083 150
- US-A- 2 079 923
- US-A- 3 236 052
- US-A- 4 069 673

## Description

L'invention concerne une machine tournante à cycle de Brayton fermé compacte, un système de propulsion comprenant une telle machine, et un véhicule pourvu d'un tel moyen de propulsion.

Le cycle de Brayton fermé est un cycle thermodynamique connu dans lequel circule un gaz, un mélange de gaz, ou fluide moteur, qui sera désigné dans la suite par "fluide moteur". Le fluide moteur est contenu dans un circuit fermé, et subit les étapes suivantes :
- le fluide moteur froid est comprimé, puis
- le fluide moteur froid comprimé est chauffé, puis
- le fluide moteur chauffé comprimé est détendu, puis
- le fluide moteur chauffé détendu est refroidi
le fluide moteur refroidi est renvoyé en compression, et ainsi de suite.

La source chaude qui chauffe le fluide moteur peut être de types différents, par exemple un réacteur nucléaire, ou une chaudière à brûleurs alimentés en fuel, ou en gaz naturel, etc..

La détente du fluide moteur s'effectue dans une turbine ou équivalent de manière à récupérer une énergie mécanique.

Les turbines à cycle de Brayton fermé sont utilisées dans certains types de centrales nucléaires, où les problèmes d'encombrement ne sont pas cruciaux. En outre, ces turbines sont faites à l'unité pour une centrale bien précise, et avec des puissances importantes en rapport avec la source chaude conséquente que représente un réacteur nucléaire.

On connaît aussi des turbines à cycle de Brayton fermé qui ont été développées dans le cadre notamment de véhicules sous-marins ou spatiaux. Là encore il s'agit de production unitaire dont les coûts sont inabordables dans le cadre d'une grande série. En outre, les turbines proposées présentent toujours des puissances et/ou des encombrements importants. Les turbines proposées comprennent deux parties structurellement bien séparées, disposées l'une à la suite de l'autre, ou l'une parallèle à l'autre, la première partie constituant l'étage de chauffage principal du fluide moteur (chaudière), et la deuxième partie constituant les étages de compression, de préchauffage, et de détente du fluide moteur. Cette disposition séparée a notamment pour inconvénients de générer des pertes de charge importantes dans les conduits de transport du fluide moteur entre les deux parties de la turbine, et de perdre la chaleur dissipée par les structures de la partie chaudière et le long des canalisations de liaison entre les différentes parties. D'autre part, les turbines connues ont des températures de partie chaude de l'ordre de 1000°C. Cela ne permet pas d'avoir un rendement thermique très élevé.

Le document FR-A-1 165 581 décrit une machine tournante à cycle de Brayton fermé comprenant les caractéristiques générales suivantes :
un circuit étanche dans lequel circule un fluide moteur, ledit circuit comprenant :
   un compresseur pour comprimer le fluide moteur ;
   en aval du compresseur, un échangeur récupérateur cylindrique creux pour préchauffer le fluide moteur comprimé ;
   en aval de l'échangeur récupérateur, une chaudière pour chauffer à haute température le fluide moteur comprimé préchauffé ;
   en aval de la chaudière, une turbine génératrice d'énergie mécanique par détente du fluide moteur H.T. comprimé, à travers ladite turbine ;
   en aval, une conduite d'échappement du fluide moteur H.T. détendu ;
   le fluide moteur H.T. détendu étant une source chaude de l'échangeur récupérateur ;
   la chaudière a une forme générale cylindrique creuse, et est intercalée coaxialement entre un ensemble axial, comprenant la turbine et la conduite d'échappement, et l'échangeur récupérateur ;
   la machine comprend des moyens de liaison entre éléments tels que, d'amont en aval, le fluide moteur circule sensiblement dans un premier sens longitudinal dans l'échangeur récupérateur, en sens contraire dans la chaudière, dans ledit premier sens dans l'ensemble turbine/conduite d'échappement, et, en tant que source chaude, en sens contraire dans l'échangeur récupérateur.

Cette machine connue comprend des caractéristiques particulières selon lesquelles la chaudière est un échangeur parcouru par un fluide de chauffage tel que le sodium liquide provenant d'une source extérieure. Il en résulte que la température de partie chaude n'est pas très élevée.

Un premier but de la présente invention est de proposer une machine tournante à cycle de Brayton fermé limitant les inconvénients cités ci-dessus.

Un autre but de la présente invention est de proposer une machine tournante à cycle de Brayton fermé ayant une puissance allant de quelques dizaines de kW à quelques centaines de kW, compacte, fonctionnant à environ 50 000 t/mn et ayant une température de source chaude bien supérieure à 1000°C et notamment de l'ordre de 1500°C. Cette température élevée améliore sensiblement le rendement thermique de la turbine.

D'autres buts de la présente invention sont de proposer une machine à combustion non polluante à pression voisine de la pression atmosphérique, susceptible d'être utilisée par une grande variété de combustibles sans grande modification, et silencieuse en fonctionnement.

A cet effet l'invention concerne une machine tournante à cycle de Brayton fermé comprenant les caractéristiques générales précédemment énoncées du document FR-A-1 165 581, et dans laquelle :
la chaudière est une chaudière H.T. comprenant un corps de chauffe cylindrique creux ayant une épaisseur radiale traversée par des canalisations longitudinales de circulation du fluide moteur comprimé préchauffé, des moyens de génération d'une source H.T. pour chauffer à haute température ledit fluide moteur comprimé préchauffé circulant dans les dites canalisations, les dites canalisations traversantes étant connectées en amont à l'échangeur récupérateur par des moyens radiaux d'alimentation de la chaudière en fluide moteur comprimé préchauffé, et en aval, à l'entrée de la turbine par des moyens radiaux de distribution du fluide moteur H.T. comprimé,
les moyens de génération de la source H.T. comprennent un circuit de combustion indépendant du circuit étanche du fluide moteur, ledit circuit de combustion comprenant des tubes longitudinaux dans l'épaisseur radiale du corps de chauffe, des distributeurs de mélange inflammable dans les tubes longitudinaux, et des moyens d'échappement des gaz de combustion résultant de la combustion du mélange inflammable.

Dans un premier mode de réalisation, les tubes longitudinaux de la source H.T. comprennent des tubes radiants placés dans des alésages longitudinaux creusés dans l'épaisseur radiale du corps de chauffe.

Dans un second mode de réalisation les tubes longitudinaux de la source H.T. comprennent des tubes de flammes longitudinaux creusés dans l'épaisseur radiale du corps de chauffe.

Dans ce mode de réalisation, le sens de circulation du fluide moteur, dans le corps de chauffe, est le même que le sens de circulation du mélange inflammable.

Dans une forme de réalisation, la conduite d'échappement du fluide moteur H.T. détendu est dans le prolongement axial de ladite turbine.

La turbine peut avantageusement être une turbine radiale à roue radiale centripète.

L'échangeur récupérateur a une forme générale de cylindre creux, dans l'épaisseur radiale duquel sont aménagés au moins deux ensembles de chemins longitudinaux de circulation, étanches les uns par rapport aux autres, le premier des ensembles de chemins étant relié, en amont, à la sortie du compresseur, et, en aval, aux moyens radiaux d'alimentation des canalisations en fluide moteur comprimé préchauffé, le deuxième ensemble de chemins étant relié, en amont, à la sortie de la conduite d'échappement du fluide moteur H.T. détendu, et, en aval, à un refroidisseur.

Dans une première variante de réalisation, l'échangeur récupérateur comprend un échangeur annulaire d'extrémité venant dans le prolongement axial de la machine tournante, comprenant des espaces radiaux faisant partie des moyens d'échappement des gaz de combustion, alternés avec des espaces radiaux destinés au passage de l'air nécessaire au mélange inflammable à réchauffer.

Dans une seconde variante de réalisation, l'échangeur récupérateur comprend un troisième ensemble de chemins longitudinaux de circulation, étanches par rapport au autres, chaque chemin du troisième ensemble de chemins faisant partie des moyens d'échappement des gaz de combustion résultant de la combustion du mélange inflammable.

Dans le seconde mode de réalisation les tubes de flamme sont disposés par séries radiales équi-répartites, et les moyens d'échappement des gaz de combustion comprennent un collecteur radial pour chaque série radiale, commun aux tubes de flamme de la série radiale concernée, localisé en aval du corps de chauffe, chaque collecteur radial ayant au moins une extrémité radiale débouchant dans une couronne coaxiale de retour des gaz d'échappement vers l'amont du corps de chauffe, ladite couronne de retour débouchant dans les chemins du troisième ensemble de chemins.

Quels que soient les modes ou variantes de réalisation, la chaudière H.T. comprend une enceinte calorifugée comprenant une paroi latérale externe, une paroi latérale interne, une base transversale annulaire, et une base transversale pleine.

La paroi latérale externe de la chaudière H.T. constitue la paroi latérale interne de l'échangeur récupérateur, et présente des orifices radiaux de liaisons entre la chaudière H.T. et l'amont des chemins du premier ensemble de chemins.

La paroi latérale interne de la chaudière H.T. constitue la paroi latérale de la conduite d'échappement et le stator de la turbine, et présente une ouverture radiale de liaison entre la chaudière H.T. et l'entrée de la turbine.

La base transversale annulaire forme, avec l'enceinte extérieure de la turbine, un passage radial entre la conduite d'échappement et l'amont des chemins du deuxième ensemble de chemins.

L'enceinte calorifugée de la chaudière, et/ou le corps de chauffe et/ou la roue de turbine radiale sont en matériau carboné.

Les parties à haute température de l'enceinte calorifugée de la chaudière, et/ou du corps de chauffe, et/ou de la roue de turbine en contact avec une atmosphère oxydante sont revêtues d'un revêtement antioxydant.

L'enceinte calorifugée de la chaudière est avantageusement à parois doubles, définissant un espace de remplissage pour un matériau calorifuge.

L'espace calorifugé comprend avantageusement un gaz inerte à une pression voisine de la pression du fluide moteur dans la chaudière H.T..

La base transversale pleine comprend un passage axial traversant pour l'axe de la roue de turbine.

Le compresseur est à roue radiale centrifuge, ladite roue étant montée à l'extérieur de l'enceinte de la chaudière, solidaire de l'axe de la turbine.

La machine selon l'invention comprend un refroidisseur de fluide moteur détendu en sortie de l'échangeur récupérateur, monté entre l'aval des chemins du deuxième ensemble de chemins et l'entrée du compresseur.

La machine tournante selon l'invention entraîne un alternateur.

Le refroidisseur est alors avantageusement de forme cylindrique creuse, localisé dans le prolongement longitudinal de l'aval des chemins du deuxième ensemble de chemins, ledit alternateur étant disposé coaxialement avec le refroidisseur, dans l'espace central vide du refroidisseur.

Dans un mode de réalisation l'alternateur est disposé à l'extérieur de l'enceinte de la chaudière, et entre ladite base transversale pleine et le compresseur. Le compresseur et la turbine sont, alors, disposés de part et d'autre de l'alternateur.

Dans un autre mode de réalisation la roue radiale centrifuge du compresseur, montée à l'extérieur de l'enceinte de la chaudière, est à proximité de la base transversale pleine de la chaudière H.T., la dite base transversale pleine de la chaudière H.T. étant une partie constitutive des moyens de liaison radiale entre la sortie du compresseur et l'amont des chemins du premier ensemble de chemins. Le compresseur et la turbine sont alors montés du même côté de l'alternateur.

Avantageusement dans l'un ou l'autre des modes de réalisation, les paliers et la butée axiale de l'axe commun sont localisés dans l'alternateur. Dans ce cas de figure, le compresseur et la turbine sont montés en porte à faux, et les paliers et la butée sont localisés dans la partie froide de la machine.

L'invention concerne aussi un système de propulsion comprenant une machine tournante selon la description ci-dessus.

L'alternateur génère de l'électricité qui alimente directement ou indirectement des moteurs électriques de propulsion.

L'invention concerne enfin un véhicule pourvu d'un système de propulsion tel que défini ci-dessus.

Une première série d'avantages de la présente invention résulte de la disposition particulière des éléments constitutifs de la machine tournante. Cette disposition permet :
un compactage sensible de la longueur axiale de la machine, et une diminution sensible de l'encombrement général de la machine
une réduction des trajets de liaison du fluide moteur entre les différents éléments constitutifs, et donc une réduction des pertes de charge induites dans ces trajets,
une réduction des pertes thermiques, par l'utilisation de la chaleur diffusée par la structure de la chaudière dans l'échangeur récupérateur.

Dans un deuxième mode de réalisation proposé, la disposition de la turbine et du compresseur permet de diminuer les risques de pertes d'étanchéité en réduisant les différences de pression de part et d'autre de certaines parois :
l'admission du fluide moteur dans le compresseur peut se faire avantageusement à pression atmosphérique, de ce fait il n'y a pas de différence de pression entre l'admission du compresseur et l'extérieur;
la sortie du compresseur a une paroi commune avec la chaudière, or la pression en sortie de compresseur est sensiblement égale à la pression dans la chaudière et dans l'entrée de la turbine, de même que précédemment le différentiel de pression est quasi nul;
dans le mode de réalisation de la chaudière à parois doubles, l'espace résultant contenant un matériau calorifuge, est rempli de gaz inerte protecteur à la pression de la chaudière, de même que précédemment le différentiel de pression est donc quasi nul. Avantageusement le gaz inerte sera le même que le fluide moteur.

Le confinement du gaz inerte protecteur se fait dans les parois externes de la double paroi, lesdites parois externes ayant des températures modérées (≤ 1000°C).

Une machine selon l'invention est silencieuse par rapport à une machine de même puissance mais à cycle ouvert. Cela provient essentiellement du fait que la machine selon l'invention consomme au moins 10 fois moins d'air qu'une machine à cycle ouvert, et du fait que cet air est entièrement destiné à la combustion, et est admis, dans la chambre de combustion, sensiblement à la pression atmosphérique et à faible vitesse.

Les débits des rejets des gaz de combustion à l'échappement sont également dans les mêmes proportions entre les deux filières de turbine.

Les vitesses des gaz de combustion à l'échappement sont également très faibles dans les cycles fermés par rapport aux cycles ouverts.

D'autres avantages et caractéristiques de la présente invention résulteront de la description qui va suivre en référence aux dessins annexés dans lesquels :
la figure 1 est une vue schématique en élévation d'une machine tournante selon l'invention;
les figures 2 et 3 sont des vues schématiques agrandies des détails II et III de la vue de la figure 1;
la figure 4 est une vue schématique partielle en coupe transversale selon la ligne IV-IV de la vue de la figure 1;
la figure 5 est une vue schématique partielle en coupe transversale selon la ligne V-V de la vue de la figure 1;
la figure 6 est une vue schématique partielle en coupe transversale selon la ligne VI-VI de la vue de la figure 1;
la figure 7 est une vue schématique partielle agrandie de la vue de la figure 5.

L'invention concerne une machine tournante à cycle de Brayton fermé. Dans la suite de la description les termes amont et aval devront être entendus par rapport au sens de circulation du fluide circulant dans l'élément considéré. Dans la suite de la description il sera utilisé le terme fluide moteur pour désigner le gaz ou mélange de gaz circulant dans le circuit fermé de la machine selon l'invention.

La machine tournante à cycle de Brayton fermé selon l'invention comprend :

un circuit étanche dans lequel circule un fluide moteur, ledit circuit comprenant :
un compresseur 1 pour comprimer le fluide moteur;
en aval du compresseur 1, un échangeur récupérateur 2 cylindrique creux pour préchauffer le fluide moteur comprimé 100;
en aval de l'échangeur récupérateur 2, une chaudière Haute Température (H.T.) 3 pour chauffer à haute température le fluide moteur comprimé préchauffé 101;
en aval de la chaudière H.T. 3, une turbine 4 génératrice d'énergie mécanique par détente du fluide moteur H.T. comprimé 102, à travers ladite turbine 4;
en aval et dans le prolongement axial de la turbine 4, une conduite d'échappement 5 du fluide moteur H.T. détendu 103.

En aval de la conduite d'échappement 5, le circuit repasse par l'échangeur récupérateur 2 où le fluide moteur H.T. détendu 103 fait office de source chaude.

Le fluide moteur H.T. détendu 103 est partiellement refroidi dans l'échangeur récupérateur 2. En sortie de l'échangeur récupérateur 2, le fluide moteur détendu partiellement refroidi 104 entre alors dans un refroidisseur 6, lequel refroidisseur 6 referme le circuit sur l'entrée du compresseur 1 auquel il fournit un fluide moteur froid détendu 105.

Selon une caractéristique de l'invention, la chaudière 3 a une forme générale cylindrique creuse, et, est intercalée coaxialement entre l'ensemble axial 4, 5 turbine/conduite d'échappement et l'échangeur récupérateur 2.

Cette disposition judicieuse permet de réduire sensiblement la longueur axiale de la partie chaude de la machine tournante par rapport aux machines connues de ce type.

En outre, pour optimiser les trajets du fluide moteur, et diminuer l'encombrement général de la machine en limitant les conduites de liaison, la machine tournante, selon l'invention, comprend des moyens de liaison entre éléments constitutifs tels que d'amont en aval, le fluide moteur circule sensiblement dans un premier sens longitudinal dans l'échangeur récupérateur 2, dans un sens contraire dans la chaudière H.T. 3, dans ledit premier sens dans l'ensemble turbine/conduite d'échappement 4, 5, et, en tant que source chaude 103, dans ledit sens contraire dans l'échangeur récupérateur 2.

Autrement dit, le fluide moteur compressé 100 est préchauffé en circulant dans l'échangeur récupérateur 2; arrivé en sortie de l'échangeur récupérateur 2, le fluide moteur compressé préchauffé 101 effectue un virage à 180° et repart en sens inverse à l'intérieur de la chaudière H.T. 3; arrivé en sortie de chaudière H.T. 3, le fluide moteur comprimé H.T. 102 effectue un virage à 180° et repart dans le sens initial à travers la turbine 4 et la conduite d'échappement 5; enfin, arrivé en fin de conduite d'échappement 5, le fluide moteur détendu H.T. 103 effectue un virage à 180° et repart en sens inverse dans l'échangeur récupérateur, en tant que source chaude.

La chaudière H.T. 3 comprend un corps de chauffe 7 cylindrique creux ayant une épaisseur radiale traversée par des canalisations longitudinales 8 de circulation du fluide moteur comprimé préchauffé 101; et des moyens 9 de génération d'une source H.T. pour chauffer à haute température le fluide moteur comprimé préchauffé 101 circulant dans les canalisations 8.

Les canalisations traversantes 8 sont connectées en amont à l'échangeur récupérateur 2 par des moyens radiaux d'alimentation 10a, 10b de la chaudière H.T. 3 en fluide moteur comprimé préchauffé 101, et, en aval, à l'entrée de la turbine 4 par des moyens radiaux de distribution 11a, 11b du fluide moteur H.T. comprimé 102.

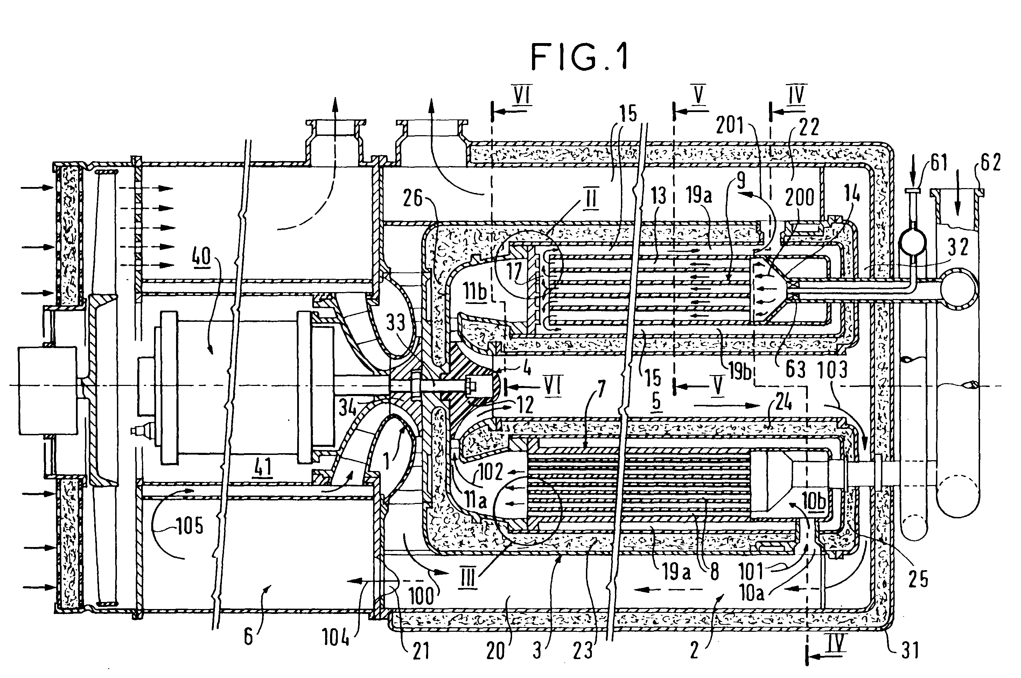

Les moyens radiaux d'alimentation peuvent par exemple comprendre des orifices radiaux 10a reliant l'échangeur récupérateur 2 à un élément annulaire d'alimentation 10b disposé en amont des canalisations 8 (Fig. 1).

De même les moyens radiaux de distribution du fluide moteur H.T. comprimé 102 peuvent par exemple comprendre un anneau collecteur 11b disposé en aval des canalisations 8 et une fente radiale 11a reliant ledit anneau collecteur à l'entrée de la turbine 4 (Fig. 1).

Avantageusement la fente radiale 11a peut comprendre des aubes directrices destinées à orienter le fluide moteur compressé H.T. de façon optimale dans la roue de turbine.

Dans le mode de réalisation représenté sur la figure 1, la turbine 4 est une turbine radiale à roue radiale centripète 12. Cependant, pour des puissances supérieures à 500 kW il peut être intéressant d'utiliser une turbine axiale mono ou pluri-étages.

Les moyens de génération de la source H.T. 9 comprennent un circuit de combustion indépendant du circuit étanche du fluide moteur.

Dans un mode de réalisation représenté sur les figures, le circuit de combustion comprend des tubes de flammes longitudinaux 13 creusés dans l'épaisseur radiale du corps de chauffe 7, des distributeurs 14 de mélange inflammable 200 dans les tubes de flammes 13, et des moyens d'échappement 15 des gaz de combustion 201 résultant de la combustion du mélange inflammable 200.

Dans le corps de chauffe 7, le sens de circulation du fluide moteur comprimé préchauffé 101 ou H.T. 102 est avantageusement le même que le sens de circulation du mélange inflammable 200.

Dans un autre exemple de réalisation non représenté, le circuit de combustion comprend des tubes radiants longitudinaux placés dans des alésages longitudinaux creusés dans l'épaisseur radiale du corps de chauffe, des distributeurs de mélange inflammable dans les tubes radiants, et des moyens d'échappement des gaz de combustion résultant de la combustion du mélange inflammable. Le principe de fonctionnement connu des tubes radiants est le suivant : un tube radiant est constitué d'un tube interieur entouré d'un tube extérieur. Le tube intérieur est destiné à la répartition du mélange inflammable dans le tube radiant, le tube extérieur a pour but de contenir les gaz de combustion de façon étanche par rapport au corps de chauffe et d'assurer le transfert de chaleur par rayonnement vers le corps de chauffe.

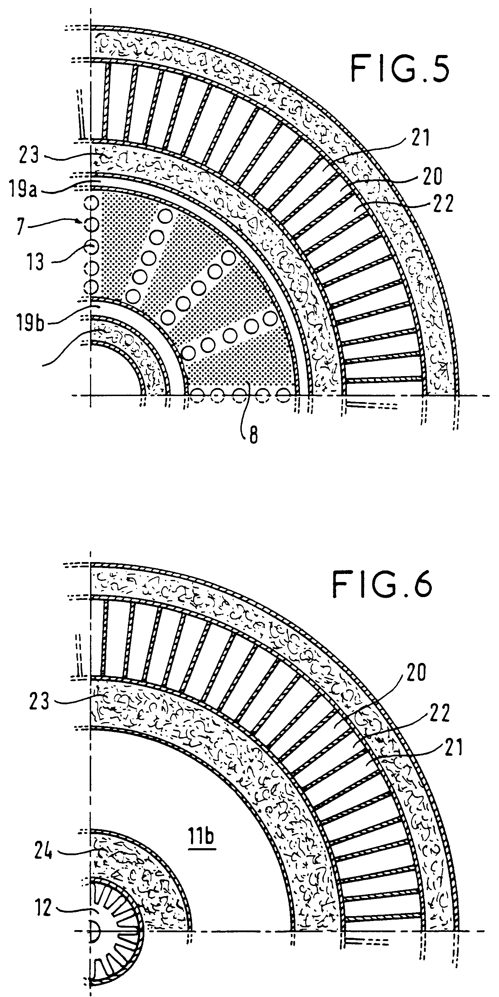

Dans le mode de réalisation représenté sur les figures, les tubes de flamme 13 sont disposés par séries radiales 16 équi-répartites, et les moyens 15 d'échappement des gaz de combustion comprennent un collecteur radial 17 pour chaque série radiale 16, commun aux tubes de flamme 13 de la série radiale 16 concernée, localisé en aval du corps de chauffe 7, chaque collecteur radial 17 ayant au moins une extrémité radiale 18 débouchant dans une couronne coaxiale 19a, 19b de retour des gaz d'échappement 201 vers l'amont du corps de chauffe 7 (Fig. 1, 2, 4, 5, 7).

Le corps de chauffe comprend deux couronnes coaxiales 19a, 19b de retour, une couronne distale 19a et une couronne proximale 19b.

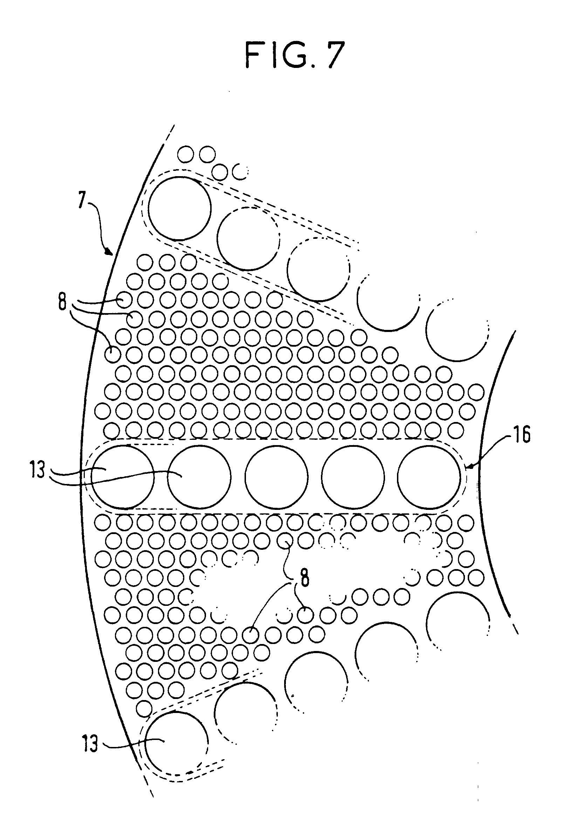

La figure 7 représente la structure du corps de chauffe 7 selon l'invention en coupe transversale partielle.

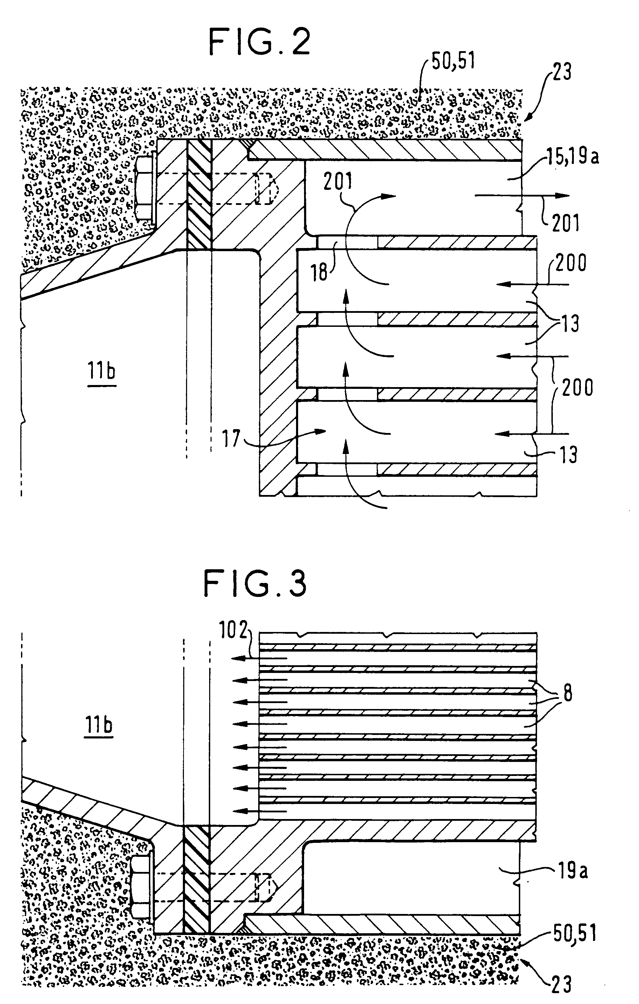

Sur la figure 1 les canalisations 8 ne sont pas dans le rapport dimensionnel de la machine. Pour cela il conviendra de se reporter aux figures 2 et 3 de détail qui sont toutes deux à la même échelle.

Chaque distributeur 14 tel que représenté sur la figure 1 comprend une amenée de combustible 61, et une amenée d'air 62, et un mélangeur 63 pour former le mélange inflammable 200. Avantageusement, le refroidisseur 6 du fluide moteur est un refroidisseur à air, et l'air du mélange inflammable 200 est préchauffé par prélèvement d'air chaud en sortie du refroidisseur. Avantageusement, le circuit d'alimentation en air comprend une soufflante mettant l'air en légère surpression par rapport à la pression atmosphérique.

L'échangeur récupérateur 2 à une forme générale de cylindre creux, dans l'épaisseur radiale duquel sont aménagés au moins deux ensembles de chemins longitudinaux de circulation, étanche les uns par rapport aux autres.

Chaque chemin 20 du premier ensemble de chemins est relié, en amont, à la sortie du compresseur 1, et, en aval, aux canalisations longitudinales 8 de circulation du fluide moteur comprimé préchauffé 101.

Chaque chemin 21 du deuxième ensemble de chemins est relié, en amont, à la sortie de la conduite d'échappement 5 du fluide moteur H.T. détendu 103, et, en aval, au refroidisseur 6.

Dans le mode de réalisation représenté sur les figures, L'échangeur récupérateur 2 comprend un troisième ensemble de chemins longitudinaux de circulation.

Chaque chemin 22 du troisième ensemble de chemins fait partie des moyens d'échappement 15 des gaz de combustion 201 résultant de la combustion du mélange inflammable 200.

Dans le mode de réalisation représenté sur les figures chaque chemin 22 du troisième ensemble de chemins est relié aux couronnes de retour 19a, 19b.

Dans l'échangeur récupérateur tel que représenté sur les figures, les chemins 20, 21, 22 forment des quartiers alternés de l'échangeur récupérateur. Autrement dit, l'épaisseur radiale de l'échangeur récupérateur est vide et comprend une pluralité de parois radiales définissant alternativement un des chemins 20, 21, 22.

Dans une variante de réalisation non représentée, l'échangeur récupérateur comprend un échangeur annulaire d'extrémité venant dans le prolongement axial de la machine tournante, comprenant des espaces radiaux faisant partie des moyens d'échappement des gaz de combustion, alternés avec des espaces radiaux destinés au passage de l'air préchauffé, nécessaire au mélange inflammable, subissant une seconde réchauffe.

La chaudière H.T. comprend une enceinte calorifugée comprenant une paroi latérale externe 23, une paroi latérale interne 24, une base transversale annulaire 25, et une base transversale pleine 26.

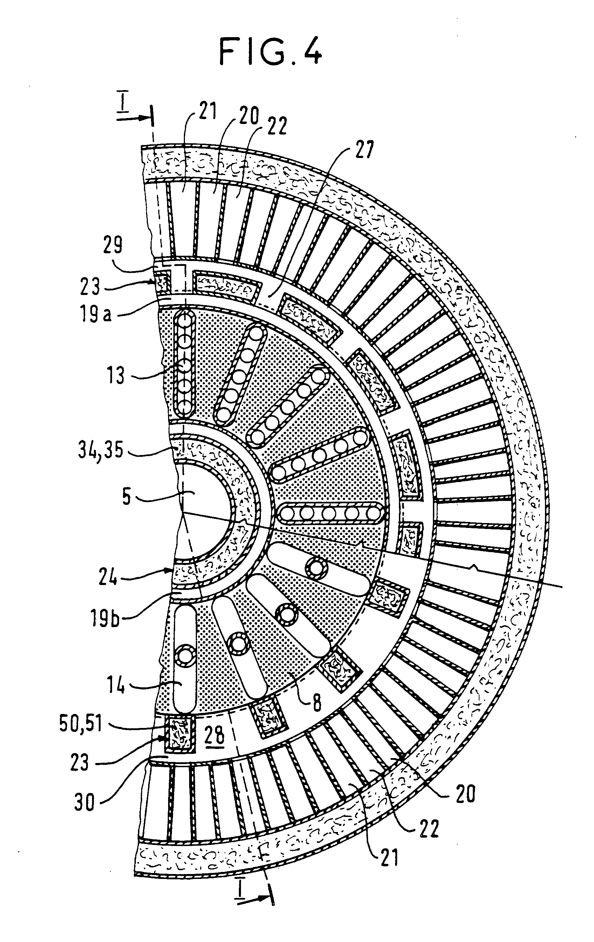

La paroi latérale externe 23 de la chaudière H.T. constitue la paroi latérale interne de l'échangeur récupérateur 2, et présente des orifices radiaux de liaisons 27, 28 entre, respectivement, les couronnes de retour 19a, 19b et un anneau 29 d'alimentation des chemins 22 du troisième ensemble de chemins (Fig. 4 partie haute), et, l'aval des chemins 20 du premier ensemble de chemins et un anneau d'alimentation 30 disposé en amont de l'élément annulaire d'alimentation 10b des canalisations 8 (Fig. 4 partie basse).

La paroi latérale interne 24 de la chaudière H.T. 3 constitue la paroi latérale de la conduite d'échappement 5 et le stator de la turbine 4, et présente la fente radiale 11a reliant l'anneau collecteur 11b en aval des canalisations 8, à l'entrée de la turbine 4.

La base transversale annulaire 25 forme, avec l'enceinte extérieure 31 de la machine, un passage radial 32 entre la conduite d'échappement 5 et l'amont des chemins 22 du deuxième ensemble de chemins.

Les parties chaudes de la machine (> 1000°C), c'est à dire l'enceinte calorifugée de la chaudière, le corps de chauffe, le stator de la turbine, et la roue de turbine, sont avantageusement en matériau carboné. Par exemple en graphite dense.

Le graphite dense a de bonnes qualités mécaniques à haute température dans la mesure où il n'est pas soumis à une atmosphère oxydante. En outre il est bon marché et se travaille facilement.

Pour pallier les problèmes d'oxydation, le graphite dense est recouvert de SiC dans au moins les parties soumises à une atmosphère oxydante. Ces parties sont principalement le circuit de combustion 9 et, dans la mesure où il serait choisi un fluide moteur non chimiquement neutre, les parties chaudes du circuit fermé du fluide moteur. Par exemple non limitatif le graphite dense peut être recouvert de SiC (Carbure de Silicium).

Dans la forme préférée de réalisation de l'invention, le fluide moteur est un gaz chimiquement neutre du type Argon, ou mélange de gaz neutres ou équivalent.

De ce fait, les parties chaudes du circuit fermé de circulation du fluide moteur n'ont pas besoin d'être protégées par un revêtement antioxydant. De même la roue de turbine peut être en graphite sans revêtement.

L'enceinte calorifugée de la chaudière peut être à parois doubles, définissant un espace de remplissage pour un matériau calorifuge 50. La paroi interne peut être en graphite recouvert d'antioxydant au moins dans les parties où cela est nécessaire pour les raisons citées ci-dessus.

L'espace calorifugé, pour les raisons d'oxydation citées précédemment, peut comprendre, outre un matériau calorifuge, un gaz inerte 51 du type Argon. Avantageusement le gaz inerte 50 aura une pression voisine de la pression du fluide moteur dans la chaudière H.T.. Cette dernière caractéristique permet de limiter les risques de rupture d'étanchéité entre l'enceinte à parois doubles et le circuit fermé du fluide moteur. En outre, cette technique permet également de réduire les contraintes mécaniques, et donc de concevoir des parois plus fines.

L'utilisation d'un gaz chimiquement neutre dans l'espace calorifugé, permet d'utilisé du feutre de graphite comme matériau calorifuge.

Le graphite étant poreux, dans le mode de réalisation préférée, le gaz 51 contenu dans l'espace calorifugé est le même que le fluide moteur. Ainsi, les gaz étant les mêmes et à la même pression, il n'y a pas de diffusion de l'espace calorifugé vers le circuit fermé ou vice versa.

Cependant, certaine parties du circuit fermé doivent malgré tout être totalement étanche vis à vis de l'espace calorifugé. C'est le cas notamment de la fente radiale 11a et du stator de la turbine. A cet effet le graphite peut être recouvert de PyroCarbone.

En outre, les canalisations 8 peuvent être avantageusement recouvertes de PyroCarbone dans le but de supprimer la diffusion du gaz moteur vers les tubes de flamme 13.

La machine selon l'invention telle que représentée sur la figure 1 est destinée à entraîner un alternateur.

Dans le mode de réalisation représenté figure 1, le refroidisseur 6 est de forme cylindrique creuse, localisé dans le prolongement longitudinal de l'aval des chemins 21 du deuxième ensemble de chemins, et l'alternateur 40 est localisé coaxialement avec le refroidisseur 6, dans l'espace central vide 41 du refroidisseur 6.

La base transversale pleine 26 de l'enceinte de la chaudière H.T. comprend un passage axial traversant 33 pour l'axe de la roue de turbine 12. Avantageusement l'étanchéité est assurée par un dispositif à labyrinthe (non représenté).

Ce passage axial traversant étanche 33 permet de monter le compresseur 1 et l'alternateur 40, entraînés par l'axe de la roue de turbine, hors de l'enceinte de la chaudière, c'est à dire hors de la partie H.T. de la machine.

Le compresseur 1 représenté sur la figure 1 est à roue radiale centrifuge 34. Cependant pour des puissances supérieures à 800 kW il est préférable d'utiliser un compresseur axial mono ou pluri-étages.

Dans le mode de positionnement représenté sur la figure 1, la roue 34 étant montée à l'extérieur de l'enceinte de la chaudière 3, solidaire de l'axe de la turbine 4. Avantageusement l'étanchéité de l'entrée du compresseur est assurée par un dispositif à labyrinthe (non représenté) monté sur l'axe.

La roue radiale centrifuge 34 du compresseur, montée à l'extérieur de l'enceinte de la chaudière H.T. 3, est à proximité de la base transversale pleine 26 de la chaudière H.T. 3. La base transversale pleine 26 de la chaudière H.T. 3 est une partie constitutive des moyens de liaison radiale entre la sortie du compresseur et l'amont des chemins 20 du premier ensemble de chemins.

La disposition de la turbine et du compresseur permet de diminuer les risques de pertes d'étanchéité en réduisant les différences de pression de part et d'autre de certaines parois :

l'admission du fluide moteur dans le compresseur peut se faire à pression atmosphérique, de ce fait il n'y a pas de différence de pression entre l'admission du compresseur et l'extérieur;

la sortie du compresseur a une paroi commune avec la chaudière, or la pression en sortie de compresseur est sensiblement égale à la pression dans la chaudière et dans la turbine, de même que précédemment le différentiel de pression est quasi nul.

Dans un autre mode de positionnement (non représenté) l'alternateur est disposé à l'extérieur de l'enceinte de la chaudière, et entre ladite base transversale pleine et le compresseur.

L'alternateur 40 est avantageusement un alternateur rapide entraîné directement par l'axe de la turbine à la vitesse de rotation de l'axe de la turbine.

Dans l'un ou l'autre des modes de positionnement, l'alternateur, localisé en partie froide de la machine, comprend les paliers et butées nécessaires pour tout l'axe commun alternateur/compresseur/turbine. Le compresseur et la turbine sont donc en porte à faux soit du même côté de l'alternateur (premier mode de positionnement) soit de part et d'autre de l'alternateur (deuxième mode de positionnement).

L'invention concerne aussi un système de propulsion comprenant une machine tournante telle que décrite ci-dessus.

L'alternateur génère de l'électricité qui alimente directement ou indirectement (par l'intermédiaire de batteries d'accumulation) des moteurs électriques de propulsion.

L'invention concerne enfin un véhicule pourvu d'un tel système de propulsion. Par exemple non limitatif un véhicule de transport en commun du type bus.

Bien entendu, l'invention n'est pas limitée au mode de réalisation décrit et représenté, mais elle est susceptible de nombreuses variantes accessibles à l'homme du métier sans que l'on s'écarte de l'invention. En particulier, on pourra, sans sortir du cadre de l'invention, remplacer tout moyen par un moyen équivalent. Par exemple les moyens de génération de la source H.T., ou le mélange inflammable, ou les matériaux utilisés peuvent être modifiés sans sortir du cadre de l'invention. Notamment les matériaux carbonés utilisés peuvent être du carbone vitreux ou du graphite renforcé par des fibres de carbone etc..

## Revendications

1. Machine tournante à cycle de Brayton fermé comprenant:
un circuit étanche dans lequel circule un fluide moteur(100, 101, 102, 103, 104, 105), ledit circuit comprenant :
un compresseur (1) pour comprimer le fluide moteur (105);
en aval du compresseur (1), un échangeur récupérateur (2) cylindrique creux pour préchauffer le fluide moteur comprimé (100);
en aval de l'échangeur récupérateur (2), une chaudière (3) pour chauffer le fluide moteur comprimé préchauffé (101);
en aval de la chaudière (3), une turbine (4) génératrice d'énergie mécanique par détente du fluide moteur H.T. comprimé (102) à travers ladite turbine (3);
en aval de la turbine, une conduite d'échappement (5) du fluide moteur H.T. détendu (103);
le fluide moteur H.T. détendu (103) étant une source chaude de l'échangeur récupérateur (2),
la chaudière (3) ayant une forme générale cylindrique creuse, et étant intercalée coaxialement entre l'ensemble axial (4, 5) turbine/conduite d'échappement et l'échangeur récupérateur (2),
la machine comprenant des moyens de liaison (10a, 10b, 11a, 11b, 32) entre éléments tels que d'amont en aval, le fluide moteur circule sensiblement dans un premier sens longitudinal dans l'échangeur récupérateur (2), en sens contraire dans la chaudière (3), dans ledit premier sens dans l'ensemble (4, 5) turbine/conduite d'échappement, et, en tant que source chaude (103), en sens contraire dans l'échangeur récupérateur (2),
**caractérisée en ce que** :
la chaudière (3) est une chaudière H.T. qui comprend un corps de chauffe (7) cylindrique creux ayant une épaisseur radiale traversée par des canalisations longitudinales (8) de circulation du fluide moteur comprimé préchauffé (101), des moyens (9) de génération d'une source H.T. pour chauffer à haute température ledit fluide moteur comprimé préchauffé (101) circulant dans les dites canalisations (8), les dites canalisations (8) étant connectées en amont à l'échangeur récupérateur (2) par des moyens radiaux (10a, 10b) d'alimentation de la chaudière en fluide moteur comprimé préchauffé (101), et en aval, à l'entrée de la turbine (4) par des moyens radiaux (11a, 11b) de distribution du fluide moteur H.T. comprimé (102),
les moyens (9) de génération de la source H.T. comprennent un circuit de combustion indépendant du circuit étanche du fluide moteur, ledit circuit de combustion comprenant des tubes longitudinaux (13) dans l'épaisseur radiale du corps de chauffe (7), des distributeurs (14) de mélange inflammable (200) dans les tubes longitudinaux (13), et des moyens d'échappement (15) des gaz de combustion (201) résultant de la combustion du mélange inflammable (200).

2. Machine tournante selon la revendication 1, **caractérisée en ce que** les tubes longitudinaux de la source H.T. comprennent des tubes radiants placés dans des alésages longitudinaux creusés dans l'épaisseur radiale du corps de chauffe (7).

3. Machine tournante selon la revendication 1 **caractérisée en ce que** les tubes longitudinaux de la source H.T. comprennent des tubes de flammes longitudinaux (13) creusés dans l'épaisseur radiale du corps de chauffe (7).

4. Machine tournante selon l'une quelconque des revendications 1 à 3, **caractérisée en ce que** la conduite d'échappement (5) du fluide moteur H.T. détendu (103) est dans le prolongement axial de la turbine (4).

5. Machine tournante selon l'une quelconque des revendications 1 à 4 **caractérisée en ce que** la turbine (4) est une turbine radiale à roue radiale (12) centripète.

6. Machine tournante selon l'une quelconque des revendications 1 à 5 **caractérisée en ce que**, dans le corps de chauffe (7), le sens de circulation du fluide moteur (101) est le même que le sens de circulation du mélange inflammable (200).

7. Machine tournante selon l'une quelconque des revendications 1 à 6 **caractérisée en ce que** l'échangeur récupérateur (2) a une forme générale de cylindre creux, dans l'épaisseur radiale duquel sont aménagés au moins deux ensembles de chemins longitudinaux de circulation, étanches l'un par rapport à l'autre, chaque chemin (20) du premier ensemble de chemins étant relié, en amont, à la sortie du compresseur (1), et, en aval, aux canalisations (8) de circulation du fluide moteur comprimé préchauffé (101), chaque chemin (21) du deuxième ensemble de chemins étant relié, en amont, à la sortie de la conduite d'échappement (5) du fluide moteur H.T. détendu (103), et, en aval, à un refroidisseur (6).

8. Machine tournante selon l'une quelconque des revendications 1 à 7 **caractérisée en ce que** l'échangeur récupérateur comprend un échangeur annulaire d'extrémité venant dans le prolongement axial de la machine tournante, comprenant des espaces radiaux faisant partie des moyens d'échappement des gaz de combustion, alternés avec des espaces radiaux destinés au passage de l'air de mélange inflammable à réchauffer.

9. Machine tournante selon la revendication 7 **caractérisée en ce que** l'échangeur récupérateur (2) comprend un troisième ensemble de chemins longitudinaux de circulation, étanches par rapport aux autres, chaque chemin (22) du troisième ensemble de chemins faisant partie des moyens d'échappement (15) des gaz de combustion (201) résultant de la combustion du mélange inflammable (200).

10. Machine tournante selon l'une quelconque des revendications 3 à 9 **caractérisée en ce que** les tubes de flammes (13) sont disposés par séries radiales (16) équi-répartites, et les moyens d'échappement (15) des gaz de combustion (201) comprennent un collecteur radial (17) pour chaque série radiale (16), commun aux tubes de flammes (13) de la série radiale (16) concernée, localisé en aval du corps de chauffe (7), chaque collecteur radial (17) ayant au moins une extrémité radiale (18) débouchant dans une couronne coaxiale (19a, 19b) de retour des gaz d'échappement (201) vers l'amont du corps de chauffe (7), ladite couronne de retour (19a, 19b) étant reliée aux chemins (22) du troisième ensemble de chemins.

11. Machine tournante selon l'une quelconque des revendications 8 à 10 **caractérisée en ce que** la chaudière H.T. (3) comprend une enceinte calorifugée comprenant une paroi latérale externe (23), une paroi latérale interne (24), une base transversale annulaire (25), et une base transversale pleine (26);
ladite paroi latérale externe (23) de la chaudière H.T. (3) constituant la paroi latérale interne de l'échangeur récupérateur (2), et présentant des orifices radiaux (28) de liaison entre l'amont des chemins (20) du premier ensemble de chemins;
ladite paroi latérale interne (24) de la chaudière H.T. (3) constituant la paroi latérale de la conduite d'échappement (5) et le stator de la turbine (4), et présentant une fente radiale (11a) de liaison entre la chaudière H.T. (3) et l'entrée de la turbine (4);
ladite base transversale annulaire (25) formant, avec l'enceinte extérieure (31) de la machine un passage radial (32) entre la conduite d'échappement (5) et l'amont des chemins (21) du deuxième ensemble de chemins.

12. Machine tournante selon la revendication 11 **caractérisée en ce que** l'enceinte calorifugée de la chaudière, et/ou le corps de chauffe , et/ou la roue de turbine sont en matériau carboné.

13. Machine tournante selon la revendication 12 **caractérisée en ce que** les parties à haute température de l'enceinte calorifugée de la chaudière, et/ou du corps de chauffe , et/ou de la roue de turbine en contact avec une atmosphère oxydante sont revêtues d'un revêtement antioxydant.

14. Machine selon la revendication 12 ou 13 **caractérisée en ce que** certaines parties de la chaudière H.T. (3) et/ou de la turbine (4) sont revêtus de PyroCarbone.

15. Machine tournante selon l'une quelconque des revendications 11 à 14 **caractérisée en ce que** l'enceinte calorifugée de la chaudière est à parois doubles, définissant un espace de remplissage pour un matériau calorifuge (50).

16. Machine tournante selon la revendication 15 **caractérisée en ce que** l'espace calorifugé comprend un gaz inerte (51) à une pression voisine de la pression du fluide moteur dans la chaudière H.T..

17. Machine tournante selon l'une quelconque des revendications 1 à 16 **caractérisée en ce que** le fluide moteur est un gaz ou un mélange de gaz chimiquement neutre.

18. Machine tournante selon la revendication 16 et 17 **caractérisée en ce que** le gaz inerte (51) de l'espace calorifugé a la même composition que le fluide moteur.

19. Machine tournante selon l'une quelconque des revendications 11 à 18 **caractérisée en ce que** la base transversale pleine (26) comprend un passage axial (33) traversant pour l'axe de la roue de turbine.

20. Machine tournante selon la revendication 19 **caractérisée en ce que** le compresseur (1) est à roue radiale centrifuge (34), ladite roue (34) étant montée à l'extérieur de l'enceinte de la chaudière, solidaire de l'axe de la turbine (4).

21. Machine tournante selon l'une quelconque des revendications 7 à 20 **caractérisée en ce qu'**elle comprend un refroidisseur (6) de fluide moteur détendu partiellement refroidi (104), monté en aval des chemins (21) du deuxième ensemble de chemins et en amont du compresseur (1).

22. Machine tournante selon l'une quelconque des revendications 1 à 21 **caractérisée en ce qu'**elle entraîne un alternateur (40).

23. Machine tournante selon la revendication 22 **caractérisée en ce que** le refroidisseur (6) est de forme cylindrique creuse, localisé dans le prolongement longitudinal de l'aval des chemin (21) du deuxième ensemble de chemins, ledit alternateur (40) étant localisé coaxialement avec le refroidisseur (6), dans l'espace central vide (41) du refroidisseur (6).

24. Machine tournante selon la revendication 22 ou 23 **caractérisée en ce que** l'alternateur (40) est disposé à l'extérieur de l'enceinte de la chaudière, et entre ladite base transversale pleine (26) et le compresseur (1).

25. Machine tournante selon l'une quelconque des revendications 20 à 24 **caractérisée en ce que** ladite roue radiale centrifuge (33) du compresseur (1), montée à l'extérieur de l'enceinte de la chaudière H.T., est à proximité de la base transversale pleine(26) de la chaudière H.T. (3), la dite base transversale pleine (26) de la chaudière H.T. (3) étant une partie constitutive des moyens de liaison radiale entre la sortie du compresseur (1) et l'amont des chemins (20) du premier ensemble de chemins.

26. Machine selon l'une quelconque des revendications 22 à 25 **caractérisée en ce que** l'alternateur (40) comprend les paliers et butées axiales de l'axe commun à la turbine (4), au compresseur (1), et à l'alternateur (40).

27. Système de propulsion comprenant une machine tournante selon l'une quelconque des revendication 1 à 26.

28. Système selon la revendication 27 **caractérisé en ce que** l'alternateur (40) génère de l'électricité qui alimente directement ou indirectement des moteurs électriques de propulsion.

29. Véhicule pourvu d'un système de propulsion selon la revendication 27 ou 28.

## Patentansprüche

1. Rotationsmaschine mit geschlossenem Brayton-Zyklus, umfassend:
einen dichten Kreislauf, in dem ein Motorfluid (100, 101, 102, 103, 104, 105) zirkuliert, wobei der Kreislauf umfaßt:
einen Kompressor (1) um das Motorfluid (105) zu komprimieren;
unterhalb des Kompressors (1) einen hohlen, zylindrischen Rückgewinnungstauscher (2), um das komprimierte Motorfluid (100) vorzuwärmen;
unterhalb des Rückgewinnungstauschers (2) eine Heizung (3) um das vorgewärmte, komprimierte Motorfluid zu erwärmen (101);
unterhalb der Heizung (3) eine Turbine (4) zur mechanischen Erzeugung von Energie durch Entspannung des komprimierten Motorfluides H. T. (102) über die Turbine (3);
unterhalb der Turbine eine Entweichungsleitung (5) für das entspannte Motorfluid H. T. (103);
wobei das entspannte Motorfluid H. T. (103) eine Wärmequelle des Rückgewinnungstauschers (2) ist,
wobei die Heizung (3) eine im allgemeinen hohlzylindrische Form hat und koaxial zwischen die axiale Anordnung (4, 5) Turbine/ Entweichungsleitung und den Rückgewinnungstauscher (2) geschoben ist,
wobei die Maschine Einrichtungen zur Verbindung (10a, 10b, lla, 11b, 32) zwischen Elementen oberhalb wie auch unterhalb umfaßt, wobei das Motorfluid im wesentlichen in eine Längsrichtung in den Rückgewinnungstauscher (2) zirkuliert, in der entgegengesetzten Richtung in der Heizung (3), in der ersten Richtung in der Anordnung (4, 5) Turbine/ Entweichungsleitung, und, als Wärmeleitung (3) in entgegengesetzter Richtung in dem Rückgewinnungstauscher (2),
**dadurch gekennzeichnet, daß**:
die Heizung (3) eine H.T.-Heizung ist, die einen hohlzylindrischen Heizkörper (7) umfaßt, mit einer radialen Dicke, die durch Längskanalisationen (8) für die Zirkulation des komprimierten, vorgewärmten Motorfluides (101) durchdrungen ist, Einrichtungen (9) zur Erzeugung einer Quelle H. T. für die Erwärmung des vorgewärmten, komprimierten Motorfluides (101) auf eine hohe Temperatur, welches in den Kanalisationen (8) zirkuliert, wobei die Kanalisation (8) oberhalb des Rückgewinnungstauschers (2) über radiale Versorgungseinrichtungen (10a, 10b) der Heizung mit vorgewärmtem, komprimiertem Motorfluid (101) verbunden sind, und unterhalb, am Eingang der Turbine (4) über radiale Einrichtungen (11a, 11b) zur Distribution des komprimierten Motorfluides H. T. (102),
wobei die Einrichtung (9) zur Erzeugung der Quelle H. T. einen von dem dichten Kreislauf des Motorfluides unabhängigen Verbrennungskreislauf umfaßt, wobei der Verbrennungskreislauf Längsröhren (13) in der radialen Dicke des Heizungskörpers (7) umfaßt, Distributoren (14) einer entflammbaren Mischung (200) in den Längsröhren (13) und Entweichungseinrichtungen (15) für das Verbrennungsgas (201) das aus der Verbrennung der entflammbaren Mischung (200) resultiert.

2. Rotationsmaschine gemäß Anspruch 1, **dadurch gekennzeichnet, daß** die Längsröhren der Quelle H. T. Radiatorröhren umfaßt, die in Längshohlbohrungen in der radialen Dicke des Heizungskörpers (7) angeordnet sind.

3. Rotationsmaschine nach Anspruch 1, **dadurch gekennzeichnet, daß** die Längsröhren der Quelle H. T. hohle Längsflammröhren (13) in der radialen Dicke des Heizungskörpers (7) umfaßt.

4. Rotationsmaschine nach einem der Ansprüche 1 bis 3, **dadurch gekennzeichnet, daß** die Entweichungsleitung (5) für das entspannte Motorfluid H. T. (103) in der Axialverlängerung der Turbine (4) liegt.

5. Rotationsmaschine nach einem der Ansprüche 1 bis 4, **dadurch gekennzeichnet, daß** die Turbine (4) eine Radialturbine mit radialem Zentripetalrad (12) ist.

6. Rotationsmaschine nach einem der Ansprüche 1 bis 5, **dadurch gekennzeichnet, daß**, in dem Heizungskörper (7), die Zirkulationsrichtung des Motorfluides (101) dieselbe ist, wie die Zirkulationsrichtung der entflammbaren Mischung (200).

7. Rotationsmaschine nach einem der Ansprüche 1 bis 6, **dadurch gekennzeichnet, daß** der Rückgewinnungscauscher (2) eine allgemeine hohlzylindrische Form hat, in dessen radialer Dicke zumindest zwei Anordnungen von Längszirkulationswegen ausgebildet sind, die gegeneinander dicht sind, wobei jeder Weg (20) der ersten Anordnung von Wegen oberhalb mit dem Ausgang des Kompressors (1) verbunden ist, und, unterhalb, mit Kanalisationen (8) der Zirkulation des vorgewärmten, komprimierten Motorfluides (101), wobei jeder Weg (21) der zweiten Anordnung von Wegen oberhalb mit dem Ausgang der Entweichungsleitung (5) des entspannten Motorfluides H. T. (103) verbunden ist, und, unterhalb, mit einem Kühler (6).

8. Rotationsmaschine nach einem der Ansprüche 1 bis 7, **dadurch gekennzeichnet, daß** der Rückgewinnungstauscher einen ringförmigen Tauscher umfaßt, dessen Ende in der axialen Verlängerung der Rotationsmaschine liegt, enthaltend radiale Räume, die Teil der Entweichungseinrichtungen für das Verbrennungsgas sind, abwechselnd mit radialen Räumen, die für den Durchtritt von Luft der zu erwärmenden entflammbaren Mischung bestimmt sind.

9. Rotationsmaschine nach Anspruch 7, **dadurch gekennzeichnet, daß** der Rückgewinnungstauscher (2) eine dritte Anordnung von Längswegen für die Zirkulation umfaßt, die gegeneinander dicht sind, wobei jeder Weg (22) der dritten Anordnung von Wegen Teil der Entweichungseinrichtung (15) des Verbrennungsgases (201) ist, das aus der Verbrennung der entflammbaren Mischung (200) resultiert.

10. Rotationsmaschine nach einem der Ansprüche 3 bis 9, **dadurch gekennzeichnet, daß** die Flammröhren (13) in gleichverteilten radialen Serien (16) angeordnet sind und die Entweichungseinrichtung (15) für das Verbrennungsgas (201) einen radialen Kollektor (17) umfasst, für jede radiale Serie (16), der den Flammröhren (13) der betroffenen radialen Serie (16) gemein ist, angeordnet oberhalb des Heizungskörpers (7), wobei jeder radiale Kollektor (17) zumindest ein radiales Ende (18) aufweist, das in einen koaxialen Kranz (19a, 19b) für die Rückführung des Entweichungsgases (201) zu dem Heizungskörper (7) mündet, wobei der Rückführungskranz (19a, 19b) mit den Wegen (22) der dritten Anordnung von Wegen verbunden ist.

11. Rotationsmaschine nach einem der Ansprüche 8 bis 10, **dadurch gekennzeichnet, daß** die Heizung H. T. (3) eine wärmedämmende Einfassung mit einer externen lateralen Wand (23) umfaßt, mit einer internen lateralen Wand (24), einer ringförmigen transversalen Basis (25) und einer gefüllten transversalen Basis (26);
wobei die externe laterale Wand (23) der Heizung H. T. (3) die interne laterale Wand des Rückgewinnungstauschers (2) bildet und radiale Öffnungen (28) aufweist, zur Verbindung der Oberseite der Wege (20) der ersten Anordnung von Wegen;
wobei die laterale interne Wand (24) der Heizung H. T. (3) die laterale Wand der Entweichungsleitung (5) bildet und den Stator der Turbine (4) und ein radiales Fenster (11a) zur Verbindung zwischen der Heizung H. T. (3) und dem Eingang der Turbine (4) aufweist;
wobei die ringförmige, transversale Basis (25) mit der äußeren Hülle (31) der Maschine einen radialen Durchgang (32) bildet, zwischen der Entweichungsleitung (5) und dem Bereich oberhalb der Wege (21) der zweiten Anordnung von Wegen.

12. Rotationsmaschine nach Anspruch 11, **dadurch gekennzeichnet, daß** die wärmedämmende Hülle der Heizung und/oder der Heizungskörper und/oder das Turbinenrad aus einem Karbonmaterial sind.

13. Rotationsmaschine nach Anspruch 12, **dadurch gekennzeichnet, daß** die Hochtemperaturteile der wärmedämmenden Hülle der Heizung und/oder des Heizkörpers und/oder des Turbinenrades in Kontakt mit einer oxidierenden Atmosphäre mit einer antioxidierenden Beschichtung versehen sind.

14. Rotationsmaschine nach Anspruch 12 oder 13, **dadurch gekennzeichnet, daß** gewisse Teile der Heizung H. T. (3) und/oder der Turbine (4) mit PyroCarbon beschichtet sind.

15. Rotationsmaschine nach einem der Ansprüche 11 bis 14, **dadurch gekennzeichnet, daß** die wärmedämmende Hülle der Heizung eine doppelte Wandung hat, die einen Raum zur Befüllung mit einem wärmedämmenden Material (50) definiert.

16. Rotationsmaschine nach Anspruch 15, **dadurch gekennzeichnet, daß** der wärmedämmende Raum ein inertes Gas (51) enthält, bei einem Druck in der Nähe des Druckes des Motorfluides in der Heizung H. T.

17. Rotationsmaschine nach einem der Ansprüche 1 bis 16, **dadurch gekennzeichnet, daß** das Motorfluid ein Gas oder eine Mischung aus chemisch neutralem Gas ist.

18. Rotationsmaschine nach Anspruch 16 und 17, **dadurch gekennzeichnet, daß** das inerte Gas (51) des wärmedämmenden Raumes dieselbe Zusammensetzung hat, wie das Motorfluid.

19. Rotationsmaschine nach einem der Ansprüche 11 bis 18, **dadurch gekennzeichnet, daß** die volle transversale Basis (26) einen Axialdurchgang (33) umfaßt, der durch die Achse des Turbinenrades geht.

20. Rotationsmaschine nach Anspruch 19, **dadurch gekennzeichnet, daß** der Kompressor (1) ein radiales Zentrifugalrad (34) ist, wobei das Rad (34) an der Außenseite der Heizungshülle montiert ist, verbunden mit der Achse der Turbine (4).

21. Rotationsmaschine nach einem der Ansprüche 7 bis 20, **dadurch gekennzeichnet, daß** sie einen Kühler (6) für das entspannte und teilweise gekühlte Motorfluid (104) umfaßt, montiert oberhalb der Wege (21), der Anordnung von Wegen und oberhalb des Kompressors (1).

22. Rotationsmaschine nach einem der Ansprüche 1 bis 21, **dadurch gekennzeichnet, daß** sie einen Alternator (40) antreibt.

23. Rotationsmaschine nach Anspruch 22, **dadurch gekennzeichnet, daß** der Kühler (26) eine hohlzylindrische Form hat, angeordnet in der Längsverlängerung unterhalb des Weges (21) der zweiten Anordnung von Wegen, wobei der Alternator (40) koaxial mit dem Kühler (6) angeordnet ist im zentralen leeren Raum (41) des Kühlers (6).

24. Rotationsmaschine nach Anspruch 22 oder 23, **dadurch gekennzeichnet, daß** der Alternator (40) außerhalb der Heizungshülle angeordnet ist und zwischen der vollen transversalen Basis (26) und dem Kompressor (1).

25. Rotationsmaschine nach einem der Ansprüche 20 bis 24, **dadurch gekennzeichnet, daß** das radiale zentrifugalrad (33) des Kompressors (1) montiert an der Außenseite der Heizungshülle H. T. in der Nähe der vollen transversalen Basis (26) der Heizung H. T. (3) ist, wobei die volle transversale Basis (26) der Heizung H. T. (3) einen konstitutiven Teil der radialen Verbindungseinrichtungen zwischen dem Ausgang des Kompressors (1) und dem Bereich oberhalb der Wege (20) der ersten Anordnung von Wegen ist.

26. Rotationsmaschine nach einem der Ansprüche 22 bis 25, **dadurch gekennzeichnet, daß** der Alternator (40) Lager und axiale Anschläge der Achse umfaßt, die der Turbine (4) dem Kompressor (1) und dem Alternator (40) gemein ist.

27. Antriebssystem mit einer Rotationsmaschine nach einem der Ansprüche 1 bis 26.

28. System nach Anspruch 27, **dadurch gekennzeichnet, daß** der Alternator (40) die Elektrizität generiert, die direkt oder indirekt die elektrischen Motoren für den Antrieb speist.

29. Fahrzeug, versehen mit einem Antriebssystem gemäß Anspruch 27 oder 28.

## Claims

1. A closed-loop Brayton cycle rotating machine comprising:
a sealed circuit in which a working fluid (100, 101, 102, 103, 104, 105) flows, said circuit comprising:
a compressor (1) for compressing the working fluid (105);
downstream of the compressor (1), a hollow cylindrical recovery heat exchanger (2) for preheating the compressed working fluid (100);
downstream of the recovery heat exchanger (2), a boiler (3) for heating the preheated compressed working fluid (101);
downstream of the boiler (3), a turbine (4) for generating mechanical energy by expanding the compressed H.T. working fluid (102) through said turbine (3);
downstream of the turbine, an exhaust pipe (5) for the expanded H.T. working fluid (103);
the expanded H.T. working fluid (103) constituting a heat source of the recovery heat exchanger (2),
the boiler (3) being in the general shape of a hollow cylinder and being interposed coaxially between the axial turbine/exhaust pipe assembly (4, 5) and
the recovery heat exchanger (2), and
comprising connecting means (10a, 10b, 11a, 11b, 32) between its components such that, in the upstream to downstream direction, the working fluid flows substantially in a first longitudinal direction in the recovery heat exchanger (2), in an opposite direction in the boiler (3), in said first direction in the turbine/exhaust pipe assembly (4, 5) and, acting as a heat source (103), in the opposite direction in the recovery heat exchanger (2),
**characterised in that**:
the boiler (3) is a H.T. boiler comprising a hollow cylindrical heater body (7) through the radial thickness of which pass longitudinal pipes (8) in which the preheated compressed working fluid (101) flows, H.T. source generator means (9) for heating said preheated compressed working fluid (101) flowing in said pipes (8) to a high temperature, said pipes (8) being connected at an upstream end to the recovery heat exchanger (2) by means (10a, 10b) for radially feeding the preheated compressed working fluid (101) to the boiler and at a downstream end to the inlet of the turbine (4) via means (11a, 11b) for radially distributing the compressed H.T. working fluid (102),
the H.T. source generator means (9) comprising a combustion circuit independent of the sealed working fluid circuit, said combustion circuit comprising longitudinal tubes (13) within the radial thickness of the heater body (7), distributors (14) for distributing an inflammable mixture (200) into the longitudinal tubes (13) and exhaust means (15) for combustion gases (201) produced by combustion of the inflammable mixture (200).

2. The rotating machine according to claim 1 **characterised in that** the longitudinal tubes of the H.T. source comprise radiant tubes placed in longitudinal slots within the radial thickness of the heater body (7).

3. The rotating machine according to claim 1 **characterised in that** the longitudinal tubes of the H.T. source comprise longitudinal flame tubes within the radial thickness of the heater body (7).

4. The rotating machine according to any of claims 1 to 3 **characterised in that** the exhaust pipe (5) for the expanded H.T. working fluid (103) is axially aligned with the turbine (4).

5. The rotating machine according to any of claims 1 to 4 **characterised in that** the turbine (4) is a radial-flow turbine with a centripetal radial-flow rotor (12).

6. The rotating machine according to any of claims 1 to 5 **characterised in that** the direction of flow of the working fluid (101) in the heater body (7) is the same as the direction of flow of the inflammable mixture (200).

7. The rotating machine according to any of claims 1 to 6 **characterised in that** the recovery heat exchanger (2) is of hollow generally cylindrical shape, comprising within its radial thickness at least two sets of longitudinal flow paths sealed off from each other, each path (20) of the first set of paths being connected at its upstream end to the outlet of the compressor (1) and at its downstream end to the pipes (8) in which the preheated compressed working fluid (101) flows, each path (21) of the second set of paths being connected at its upstream end to the outlet of the exhaust pipe (5) for the expanded H.T. working fluid (103) and at its downstream end to a cooler (6).

8. The rotating machine according to any of claims 1 to 7 **characterised in that** the recovery heat exchanger includes an end annular heat exchanger axially aligned with the rotating machine and including radial spaces that are part of the combustion gas exhaust means alternating with radial spaces for the flow of inflammable mixture air to be reheated.

9. The rotating machine according to claim 7 **characterised in that** the recovery heat exchanger (2) includes a third set of longitudinal flowpaths, sealed from the others, each path (22) of the third set of paths being part of the exhaust means (15) for combustion gases (201) produced by combustion of the inflammable mixture (200).

10. The rotating machine according to any of claims 3 to 9 **characterised in that** the flame tubes (13) are disposed in uniformly distributed radial series (16) and the combustion gas (201) exhaust means (15) comprise a radial collector (17) for each radial series (16) common to the flame tubes (13) of the radial series (16) concerned, located downstream of the heater body (7), each radial collector (17) having at least one radial end (18) discharging into a coaxial ring (19a, 19b) for returning the exhaust gases (201) towards the upstream end of the heater body (7), said return ring (19a, 19b) being connected to the paths (22) of the third set of paths.

11. The rotating machine according to any of claims 8 to 10 **characterised in that** the H.T. boiler (3) comprises a thermally insulated enclosure comprising an external lateral wall (23), an internal lateral wall (24), an annular transverse base (25) and a solid transverse base (26);
said external lateral wall (23) of the H.T. boiler (3) constituting the internal lateral wall of the recovery heat exchanger (2) and having radial connecting orifices between the H.T. boiler (3) and the upstream end of the paths (22) of the third set of paths and between the upstream end of the paths (20) of the first set of paths;
said internal lateral wall (24) of the H.T. boiler (3) constituting the lateral wall of the exhaust pipe (5) and the stator of the turbine (4) and having a radial slot (11a) connecting the H.T. boiler (3) and the inlet of the turbine (4);
said annular transverse base (25) forming, with the external enclosure (31) of the machine, a radial passage (32) between the exhaust pipe (5) and the upstream end of the paths (21) of the second set of paths.

12. The rotating machine according to claim 11 **characterised in that** the thermally insulated enclosure of the boiler and/or the heater body and/or the turbine rotor are made from a carbon-based material.

13. The rotating machine according to claim 12 **characterised in that** the parts at a high temperature of the thermally insulated enclosure of the boiler and/or the heater body and/or the turbine rotor in contact with an oxidising atmosphere are covered with an anti-oxidant coating.

14. The machine according to claim 12 or claim 13 **characterised in that** certain parts of the H.T. boiler (3) and/or of the turbine (4) are covered with pyrocarbon.

15. The rotating machine according to any of claims 11 to 14 **characterised in that** the thermally insulated enclosure of the boiler is of the type having double-walls defining a space that can be filled with a thermally insulative material (50).

16. The rotating machine according to claim 15 **characterised in that** the thermally insulated space contains an inert gas (51) at a pressure close to the pressure of the working fluid in the H.T. boiler.

17. The rotating machine according to any of claims 1 to 16 **characterised in that** the working fluid is a chemically neutral gas or gas mixture.

18. The rotating machine according to claims 16 and 17 **characterised in that** the inert gas (51) in the thermally insulated space has the same composition as the working fluid.

19. The rotating machine according to any of claims 11 to 18 **characterised in that** the solid transverse base (26) comprises an axial passage (33) for the shaft of the turbine rotor.

20. The rotating machine according to claim 19 **characterised in that** the compressor (1) has a radial-flow centrifugal rotor (34), said rotor (34) being mounted outside the enclosure of the boiler, fastened to the shaft of the turbine (4).

21. The rotating machine according to any of claims 7 to 20 **characterised in that** it comprises a cooler (6) for the partially cooled expanded working fluid (104) downstream of the paths (21) of the second set of paths and upstream of the compressor (1).

22. The rotating machine according to any of claims 1 to 21 **characterised in that** it drives an alternator (40).

23. The rotating machine according to claim 22 **characterised in that** the cooler (6) is of hollow cylindrical shape, longitudinally aligned with the downstream end of the paths (21) of the second set of paths, said alternator (40) being coaxial with the cooler (6), within the empty central space (41) of the cooler (6).

24. The rotating machine according to claim 22 or claim 23 **characterised in that** the alternator (40) is outside the enclosure of the boiler, between said solid transverse base (26) and the compressor (1).

25. The rotating machine according to any of claims 20 to 24 **characterised in that** said radial-flow centrifugal rotor (33) of the compressor (1), outside the enclosure of the H.T. boiler, is near the solid transverse base (26) of the H.T. boiler (3), said solid transverse base (26) of the H.T. boiler (3) constituting part of the radial connecting means between the outlet of the compressor (1) and the upstream end of the paths (20) of the first set of paths.

26. The machine according to any of claims 22 to 25 **characterised in that** the alternator (40) comprises the bearings and axial thrust bearings of the common shaft of the turbine (4), the compressor (1) and the alternator (40).

27. A propulsion system comprising a rotating machine according to any of claims 1 to 26.

28. The system according to claim 27 **characterised in that** the alternator (40) generates electricity feeding propulsion electric motors directly or indirectly.

29. A vehicle provided with a propulsion system according to claim 27 or claim 28.
